# EUROPEAN PATENT APPLICATION

(11) **EP 2 505 827 A2**
(43) Date of publication of application: **03.10.2012**
(21) Application number: 12075024.5
(22) Date of filing: 09.03.2012
(51) Int. Cl.: F03D 7/00

(54) **Wind power prediction method of single wind turbine generator**

(30) Priority: 10.03.2011 CN 201110058365
(71) Applicant: Sinovel Wind Group Co., Ltd, Haidian District, Beijing 100872 (CN)
(72) Inventor: Hou, Wei, Beijing, 100872 (CN); Gan, Jiafei, Beijing, 100872 (CN); Wang, Ying, Beijing, 100872 (CN)
(74) Representative: Pfenning, Meinig & Partner GbR

(57) **Abstract**

The present invention discloses a wind power prediction method for a single wind turbine generator, comprising: extracting a plurality of data fragments, each of which has a length of L, from a historical database to determine a feature fragment core library before a current time point T, wherein L is an integer greater than or equal to one; clustering the feature fragment core library to form w cluster subsets and w cluster centers with the adoption of a clustering algorithm, wherein w is an integer greater than or equal to one; and determining power P (T+1) at a time-point T+1 to be predicted according to the w cluster centers and a center of a current time fragment, the current time fragment representing a time period from time point T-Z to time point T, wherein Z is a step number and 1≤Z≤L. The wind power prediction method for the single wind turbine provided by the present invention can reliably and effectively forecast the wind power.

## Description

### FIELD OF THE TECHNOLOGY

The present invention relates to a wind power generation technique, in particular to a wind power prediction method of a single wind turbine generator.

### BACKGROUND

Wind power generation has become a renewable energy resource with the most rapid development speed in recent several years. The wind power will make more than 12% of the electricity supply in the world in the future. However, as wind has the nature of fluctuation and intermittency, the typical characteristic of the wind power generation is uncontrollability. If a wind power station with high capacity is combined into a power grid, very high load and even danger will be generated during the operation of the power grid. As the wind power capacity is continuously increased and electricity demand is gradually saturate, wind power enterprises are gradually required by power markets to have price bidding for transaction and predict energy production in advance. In order that wind power capacity adopted by power grid is increased and the security of the power grid is guaranteed, it is very necessary and significant to predict the power of a wind turbine generator.

The main methods for solving the abovementioned problems comprise a physical method and a statistical method. The former must have data such as a detailed wind-site topographic map, wind turbine arrangement coordinates, wind power curves and so on; furthermore, it has complicated procedures. This method comprises a micrometeorological model and a Computational Fluid Dynamics (CFD) model. In these techniques, micro sitting is often used. The latter has simple procedures but its fluctuation is relatively large. It comprises techniques such as NN (Neural Network), SVM (Support Vector Machine) and so on. The statistical method is mostly used for predicting wind power in short term, because there are potentially some significant modes in historical data which can be used for recognizing short-term laws of meteorological changes. Based on these modes, future meteorological conditions can be speculated. As for the prior short-term prediction method based on statistics, the changes of wind speed are taken as a random process, which is fitted with time-series statistical models. However, as local features can not be grasped by these prediction models because of the characteristics of wind speed itself, it is hard for these models to keep overall situation stable, and each condition of the changes of the wind speed can not be described. For example, if the influence of the changes of the wind speed is ignored, prediction effect is difficult to be satisfactory.

### SUMMARY

One aspect of the present invention provides a wind power prediction method of a single wind turbine generator for reliably and effectively predicting the wind power.

A wind power prediction method of a single wind turbine provided according to an embodiments of the present invention comprises:

Step a: extracting a plurality of data fragments, each of which has a length of L, from a historical database to determine a feature fragment core library before a current time point T, wherein L is an integer greater than or equal to one, and the feature fragment core library comprises feature fragments consisting of feature values of the data fragments;

Step b: clustering the feature fragment core library to form w cluster subsets and w cluster centers with the adoption of a clustering algorithm, wherein w is an integer greater than or equal to one; and

Step c: determining power P (T+1) at a time-point T+1 to be predicted according to the w cluster centers and a center of a current time fragment, the current time fragment representing a time period from time point T-Z to time point T, wherein Z is a step number and 1≤Z≤L.

The abovementioned method preferably further comprises:

Step d: updating the time point T+1 as the current time point, and repeating the Step c until power at a time point to be predicted is predicted.

According to the abovementioned method, preferably, data in the historical database take data types as a coordinate axes, and the number of the data types is V, wherein V is an integer greater than or equal to one.

According to the abovementioned method, preferably, the data types comprise at least one of wind speed, wind direction, temperature, air pressure and power.

According to the abovementioned method, preferably, the Step a specifically comprises:

Step a₁: extracting S data fragments, each of which has the length of L, from the historical database;

Step a₂: determining m×V feature value of each of the data fragments with the adoption of a predetermined model;

Step a₃: taking m×V the feature value as one feature fragment, then obtaining S feature fragments, and forming an initial feature fragment core library by the S feature fragments; and

Step a₄: extending the initial feature fragment core library to form the feature fragment core library,

wherein both of S and m are integers which are greater than or equal to one.

According to the abovementioned method, preferably, the step extending the initial feature fragment core library to form the feature fragment core library comprises:

Step a₄₁: extending data in each of the feature fragments according to a predetermined extension proportion e to form candidate fragments, and selecting and adding part of the candidate fragments into the initial feature fragment core library according to a predetermined parameter proportionality factor p and feature obviousness; and

Step a₄₂: repeating the Step a₄₁ until a number of extension reaches a maximum iterations r, and selecting and adding part of the candidate fragments into the initial feature fragment core library to form the feature fragment core library according to the predetermined parameter proportionality factor p and the feature obviousness.

According to the abovementioned method, preferably, the predetermined model adopted for determining the m×V feature value of each of the data fragments is an ARMA(p,q) model.

According to the abovementioned method, preferably, before the m×V feature value of each of the feature fragments is determined, the method further comprises:

determining values of p and q of the ARMA(p,q) model according to a formula of *Xₜ-*ϕ₁*X*_{*t*-1} *-*···*-* ϕ*ₚXₜ₋ₚ* = ε*ₜ-*θ₁ε*ₜ₋₁ -*···*-* θ*_{q}*ε*_{t-q}*, wherein X is Auto-Regressive Moving Average Sequence, of which orders of the ARMA(p,q) model are p and q, and ε represents stationary white noise of which an average value is zero and a variance is σ².

According to the abovementioned method, preferably, m=p+q+Y, wherein Y is a predetermined number of feature sub-fragments of each of the feature fragments and is an integer greater than or equal to one.

According to the abovementioned method, preferably, m the feature values are respectively ϕ₁, ϕ₂ ... ϕ*ₚ*; θ₁, θ₂...θ_{q} and an average value of each of Y the feature sub-fragments.

According to the abovementioned method, preferably, the clustering algorithm adopted in the Step b is K-means algorithm or Kohonen algorithm.

According to the abovementioned method, preferably, the Step c comprises:

determining the center of the current time fragment with the adoption of a predetermined model, weights n₁, n₂, n₃......n_{w} of the w cluster centers and the center of the current time fragment, and powers P₁, P₂, P₃......P_{w} of all the cluster centers;

the power P (T+1) is n₁Xp₁+n₂xp₂+n₃xP₃+.... n_{w}×P_{w}.

According to the abovementioned method, preferably, the predetermined model adopted for determining the center of the current time fragment is an ARMA(p,q) model.

The wind power prediction method for the single wind turbine provided by the present invention can reliably and effectively forecast the wind power.

### BRIEF DESCRIPTION OF THE DRAWINGS

Fig. 1 is a flow diagram of a method for predicting wind power according to Embodiment 1 of the present invention.

Fig. 2 is a flow diagram of a method for forming a feature fragment core library by extending an initial feature fragment core library feature fragment according to Embodiment 1 of the present invention.

### DETAILED DESCRIPTION

In order to make the purposes, technical solution and advantages of the embodiments of the present invention clearer, the technical solution in the embodiments of the present invention will be clearly and completely described hereinafter according to the drawings of the present invention. Obviously, those described here are not all but only a part of embodiments of the present invention. On the basis of the embodiments of the present invention, all other embodiments obtained by the ordinary skill in the art without any creative work should fall in the protection scope of the present invention.

Embodiments for a wind power prediction method for a single wind turbine generator are provided according to the present invention in the following. The term "single wind turbine generator" here indicates one wind turbine generator, that is, the wind power of one wind turbine generator is to be predicted.

Embodiment 1

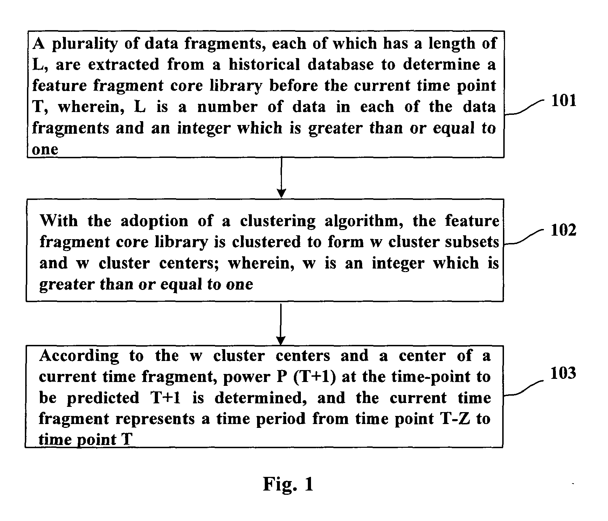

Fig. 1 is a flow diagram of a method for predicting power P (T+1) at time point T+1 according to Embodiment 1 of the present invention, wherein T is a current time point.

Step 101: a plurality of data fragments, each of which has a length of L, are extracted from a historical database to determine a feature fragment core library before the current time point T, wherein, L is an integer greater than or equal to one, indicating the number of data in each of the data fragments;

Step 102: with the adoption of a clustering algorithm, the feature fragment core library is clustered to form w cluster subsets and w cluster centers; wherein, w is an integer greater than or equal to one; and

Step 103: according to the w cluster centers and a center of a current time fragment, power P (T+1) at the time-point T+1 to be predicted is determined. The current time fragment represents a time period from time point T-Z to time point T, wherein Z is a step number and 1≤Z≤L.

The feature fragment core library is a database including feature fragments consisting of feature values of the data fragments, and this database relates to data types. For example, each of the feature values is a data point taking the data types as coordinate axes. The center of the current time fragment indicates a center obtained with the adoption of a predetermined model according to the data types. For example, the feature values of the current time fragment can be calculated by using an ARMA(p,q) model as the predetermined model and they are set as the center of the current time fragment. Of course, those skilled in the art can also adopt other the prior arts to calculate the center of the current time fragment. No more details will be given here.

It is needed to point out that the abovementioned time point T+1 to be predicted is a time point after the current time point passes by a time interval, i.e., a step unit. For example, if the data in the historical database are recorded with a time interval of 10 minutes, that is, the step unit is 10 minutes, and the current time point is T, T+1 will represent a time point after 10 minutes; T+2 will represent a time point after 20 minutes, and T-1 will represent a time point before 10 minutes. Similarly, if the data in the historical database are recorded with a time interval of 1 hour, that is, the step unit is 1 hour, and the current time point is 8 a.m., T+1 will represent a time point of 9 a.m.; T+2 will represent a time point of 10 a.m., and T-1 will represent 7 a.m., and so on.

When the time point required to be predicted is not the next time point of the current time point, a former time point of the time point required to be predicted is required to be predicted. That is, the time point T+1 to be predicted is updated as the current time point. Step c is repeated until the power P (T+1) is predicted. Preferably, the time point required to be predicted is limited to be within 6 hours after the current time point T, because, with increasing proportion of the predicted time points in the current time fragment, a prediction model will become more and more inaccurate. Therefore, in general, only a wind power within 6 hours after the current time point can be predicted.

Data in the feature fragment core library take data types as vectors of coordinate axes, and the number of the data types is V, wherein V is an integer greater than or equal to one. For example, the data types corresponding to the data in the feature fragment core library are respectively any one of or any combination of wind speed, wind direction, temperature, air pressure and power.

Specifically, Step 101 comprises:

S the data fragments, each of which has the length of L, are extracted from the historical database;

m×V feature value of each of the data fragments are determined with the adoption of a predetermined model;

m×V feature value is taken as one feature fragment, then S feature fragments are obtained, and the S feature fragments form an initial feature fragment core library; and

the initial feature fragment core library is extended to form the feature fragment core library,

wherein both of S and m are integers which are greater than or equal to one.

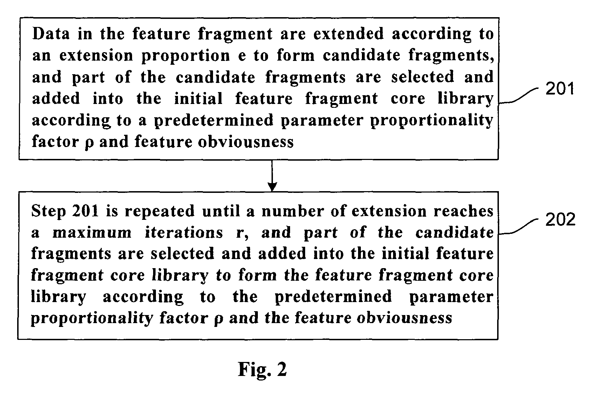

As shown in FIG. 2, the step that the initial feature fragment core library is extended to form the feature fragment core library is described specifically in the following:

Step 201: data in the feature fragment are extended according to an extension proportion e to form candidate fragments, and part of the candidate fragments are selected and added into the initial feature fragment core library according to a predetermined parameter proportionality factor p and feature obviousness; and

Step 202: Step 201 is repeated until a number of extension reaches a maximum iterations r, and part of the candidate fragments are selected and added into the initial feature fragment core library to form the feature fragment core library according to the predetermined parameter proportionality factor p and the feature obviousness.

Preferably, an ARMA(p,q) model is adopted as the predetermined model to determine the m×V feature values of each of the data fragments. Values of p and q in the model can be determined according to a formula of *Xₜ*-ϕ₁*X*_{*t*-1} -···- ϕ*ₚXₜ₋ₚ=*ε*ₜ-*θ₁ε_{*t*-1} -···- θ_{q}ε*_{t-q},* wherein X is Auto-Regressive Moving Average Sequence of which orders of the ARMA(p,q) model are p and q. That is, X={X₁,X₂, X₃...Xₜ} and relates to the data types, wherein t represents a time point, preferably, T=t; ε represents stationary white noise of which an average value is zero and a variance is σ². ε elates to the data types. The ARMA(p,q) is an analysis model which is often used in the prior art. The detailed method and steps will not be described any more here.

The number of the feature values of each of the feature fragments is m=p+q+Y, wherein Y is a predetermined number of feature sub-fragments of each of the feature fragments. That is, each of the feature fragments is divided into Y sections, wherein Y is an integer greater than or equal to one. m the feature values are respectively ϕ₁, ϕ₂... ϕ*ₚ*; θ₁, θ₂*...* θ*_{q}* and an average value of each of Y the feature sub-fragments.

Among the abovementioned, the step that the initial feature fragment core library is extended to form the feature fragment core library can be explained as, for example, that the initial feature fragment core library has 5 data fragments, which are respectively A₁={a₁, a₂, a₃...a₁₀₀}, A₂={a₁₀₁, a₁₀₂, a₁₀₃...a₂₀₀}, A₃={a₂₀₁, a₂₀₂, a₂₀₃...a₃₀₀}, A₄={a₄₀₁, a₄₀₂, a₄₀₃...a₅₀₀}, A₅={a₅₀₁, a₅₀₂, a₅₀₃...a₆₀₀}, The data fragments A₁, A₂, A₃, A₄ and A₅ are respectively extended. At this time, L=100. When the data fragments are extended, they shall be extended forwards and backwards. When there is no data that can not be extended on one side, the extension on this side can be abandoned. Take A₂ as an example, when e=5% and ρ=20%, after the first extension, a first candidate fragment extended from the data fragment A₂ is formed. That is, {a₉₆, a₉₇, a₉₈, a₉₉, a₁₀₀, a₁₀₁, a₁₀₂, a₁₀₃...a₂₀₀, a₂₀₁, a₂₀₂, a₂₀₃, a₂₀₄, a₂₀₅}. Therefore, the length of the first candidate fragment extended from A₂ is 110, that is, it is L (1+2e) . Similarly, respective first candidate fragments of A₁, A₃, A₄ and A₅ are respectively extended. According to p, the fragment of which the feature obviousness is relatively high is selected from 5 the first candidate fragments and added into the fragment core library. The "feature obviousness" relates to Manhattan distances between each of the candidate fragments and other candidate fragments. If one candidate fragment is nearer to other candidate fragments in terms of Manhattan distance, its feature obviousness will be lower; if one candidate fragment is farther to other candidate fragments in terms of Manhattan distance, its feature obviousness will be higher. Before the Manhattan distance is calculated, the feature values shall be carried out with normalization. The feature obviousness can be simply defined as the average value of the Manhattan distances between each of the candidate fragments and other the candidate fragments. And then, pS the first candidate fragments of which the feature obviousness is relatively high are selected. That is, the first candidate fragments of which the values of the feature obviousness are relatively large are selected. For example, here, if 20%×5=1 is selected, one first candidate fragment is required to be selected and added into the feature fragment core library. That is, the first candidate fragment of which the value of feature obviousness is the highest is selected. Thus, after a first extension, the number of the data fragments of the initial feature fragment core library becomes 6.

Then, a second extension is carried out. The method of the second extension and that of the first extension are similar, and their difference is that: 5 fragments required to be extended in the first extension become 6 fragments required to be extended in the second extension. Therefore, after the second extension, there are 6 of the second candidate fragments. Similarly, the second candidate fragments of which the feature obviousness is relatively high are selected and added into the feature fragment core library. And by such analogy, the steps are repeated until the number of the extension reaches the maximum iterations r. And after the candidate fragments of which the feature obviousness is relatively high are selected and added into the initial feature fragment core library, the final feature fragment core library is formed.

Preferably, the clustering algorithm adopted in the Step 102 is a K-means algorithm or a Kohonen algorithm for forming the w clustered subsets. While the w cluster subsets are formed, a cluster center of each of the cluster subsets is also formed. There are totally w cluster centers. Number of w can be selected according to actual requirement.

Preferably, Step 103 specifically comprises: the current time fragment, which represents the time period from time points T-Z to time point T, is selected, wherein Z is a step number and 1≤Z≤L. For example, the ARMA(p,q) model is adopted to be the predetermined model to extract the center of the current time fragment; distances between the center of the current time fragment and centers of all the cluster subsets are calculated; the calculated distances are carried out with normalization to obtain the weights n₁, n₂, n₃......n_{w} of the center of the current time fragment and the centers of the w cluster subsets. The powers P₁, P₂, P₃......P_{W} corresponding to the centers of all the cluster subsets are multiplied respectively with the corresponding weights to obtain the power P (T+1) of the objective to be predicted, which is n₁×P₁+n₂×P₂+n₃×P₃+...n_{W}×P_{W}. It should be pointed out that: as for the time point T+1 to be predicted, not only power but also values of all of feature types can be predicted. When a power P (T+2) at time point T+2 is to be predicted, the first time point of the original current time fragment is required to be removed and the data of the time point T+1 are added into the current time fragment. That is, the length of the current time fragment is guaranteed to always be Z+1. When a power P (T+3) at time point T+3 is to be predicted, the data of the time point T+1 and the data of the time point T+2 are both added into the current time fragment, and by such analogy. As the powers at the time points subsequently added into the current time fragment are all obtained by prediction, the accuracy becomes lower and lower. Therefore, the method for predicting the wind power according to the embodiment can guarantee the prediction accuracy of the wind power within 6 hours after the current time point.

According to the embodiment, meteorological features corresponding to the time points in the historical database are divided more meticulously, a plurality of cluster subsets are established, and based on the cluster centers of these cluster subsets, the wind power is predicted, thus reducing complexity of a nonlinear system represented by the feature fragment core library, predicting the wind power reliably and effectively as well as increasing its accuracy.

Embodiment 2

Embodiment 2 is a specific example for predicting the wind power of the single wind turbine generator according to the method of Embodiment 1 and detects accuracy of this method. 68156 data before the current time point T can be found in historical data, among which 50000 data are selected and taken as a climate feature database of Embodiment 2. It shall be pointed out that the 50000 data do not comprise the initial 100 data and the final 100 data in the historical data, so that enough data are set aside to carry out the sequent extension steps. Supposed that the current time point is 10 a.m. and the data in the historical data are timing data taking 10 minutes as the step unit, wind power at 10: 10 a.m. shall be predicted.

Predetermining ρ=20%, e=5%, L=10000, r=30, the data take the data types as coordinate axes. The data types in Embodiment 2 are respectively wind speed, wind direction and power, that is, the number V of the data types is 3. At this time, 50000 data are divided into 5 the data fragments. Next, the features of the 5 data fragments are extracted to form the initial feature fragment core library.

Firstly, according to the ARMA(p,q) model, that is, a formula of *Xₜ-*ϕ₁*X*_{*t-*1}*-···-*ϕ*ₚXₜ₋ₚ=*ε*ₜ-*θ₁ε*ₜ₋₁-···-*θ*_{q}*ε*_{t-q},* is utilized to determine p and q values, wherein X is Auto-Regressive Moving Average Sequence of which the orders of the ARMA(p,q) model are p and q, and ε represents stationary white noise of which the average value is zero and the variance is σ² and relates to wind speed, wind direction and power. The detailed algorithm is the prior art of the field and will not be described any more here. With calculation, in Embodiment 2, p=3, q=5. According to predetermined sectioning value, each the feature fragment is divided into 5 sections, that is, Y=5. Therefore, the number of the feature values of each the feature type of each the feature fragment is m=3+5+5=13. That is, the number of all the feature values of each the feature fragment is m×V=13×3=39.

Next, according to ρ=20%, e=5% and r=30, the 5 data fragments are extended. The extension method is the same to that of Embodiment 1. The feature fragment core library is finally formed and comprises 11552 of the feature fragments.

According to the K-means algorithm, the feature fragment core library is divided into 3 cluster subsets which respectively comprise 5162 of the data fragments, 3834 of the data fragments and 2556 of the data fragments, and the cluster center of each the cluster subset is also determined. The cluster center, for example, is offered with the form of the average value of each the data fragment or with the other prior method for calculating the center, it will not be described any more here.

The data at the current time point, i.e., 10 a.m. and 10000 data before 10 a.m. are selected as the current time fragment. The center of the current time fragment is obtained with the adoption of the ARMA(p,q) model. The distances between all the cluster centers and the center of the current time fragment are calculated and carried out with normalization to obtain the weights, which are respectively 0.4, 0.3 and 0.3 in Embodiment 2. The power values corresponding to all the cluster centers are respectively 1400kw, 1350kw and 1450kw. Therefore, the power at 10:10 a.m. is 1400×0.4+1350×0.3+1450×0.3=1400kw.

The power at the time point 10: 10 a.m. in the historical data is just 1400kw which is the same as the predicted value above, thus the predicted wind power of the single wind turbine generator can be guaranteed to be relatively accurate according to the method of the present invention.

Finally, it should be noted that the above examples are merely provided for describing the technical solutions of the present invention, but not intended to limit the present invention. It should be understood by the ordinary skill in the art that although the present invention is described in detail with reference to the foregoing embodiments, modifications can be made to the technical solutions described in the foregoing embodiments, or equivalent replacements can be made to some technical features in the technical solutions, without the essence of corresponding technical solutions departing from the scope of the embodiments of the present invention.

## Claims

1. A wind power prediction method for a single wind turbine generator, comprising:
Step a: extracting a plurality of data fragments, each of which has a length of L, from a historical database to determine a feature fragment core library before a current time point T, wherein L is an integer greater than or equal to one, and the feature fragment core library comprises feature fragments consisting of feature values of the data fragments;
Step b: clustering the feature fragment core library to form w cluster subsets and w cluster centers with the adoption of a clustering algorithm, wherein w is an integer greater than or equal to one; and
Step c: determining power P (T+1) at a time-point T+1 to be predicted according to the w cluster centers and a center of a current time fragment, the current time fragment representing a time period from time point T-Z to time point T, wherein Z is a step number and 1≤Z≤L.

2. The wind power prediction method of claim 1, further comprising:
Step d: updating the time point T+1 as the current time point, and repeating the Step c until power at a time point to be predicted is predicted.

3. The wind power prediction method of claim 2, wherein data in the historical database take data types as a coordinate axes, and a number of the data types is V, wherein V is an integer greater than or equal to one.

4. The wind power prediction method of claim 3, wherein the data types comprise at least one of wind speed, wind direction, temperature, air pressure and power.

5. The wind power prediction method of any one of claims 1-4, wherein the Step a specifically comprises:
Step a₁: extracting S data fragments, each of which has the length of L, from the historical database;
Step a₂: determining m×V feature value of each of the data fragments with the adoption of a predetermined model;
Step a₃: taking m×V the feature value as one feature fragment, then obtaining S feature fragments, and forming an initial feature fragment core library by the S feature fragments; and
Step a₄: extending the initial feature fragment core library to form the feature fragment core library,
wherein both of S and m are integers which are greater than or equal to one.

6. The wind power prediction method of claim 5, wherein the step of extending the initial feature fragment core library to form the feature fragment core library comprises:
Step a₄₁: extending data in each of the feature fragments according to a predetermined extension proportion e to form candidate fragments, and selecting and adding part of the candidate fragments into the initial feature fragment core library according to a predetermined parameter proportionality factor p and feature obviousness; and
Step a₄₂: repeating the Step a₄₁ until a number of extension reaches a maximum iterations r, and selecting and adding part of the candidate fragments into the initial feature fragment core library to form the feature fragment core library according to the predetermined parameter proportionality factor p and the feature obviousness.

7. The wind power prediction method of claim 5, wherein the predetermined model adopted for determining the m×V feature value of each of the data fragments is an ARMA(p,q) model.

8. The wind power prediction method of claim 7, wherein before the m×V feature value of each of the feature fragments are determined, the method further comprises:
determining values of p and q of the ARMA(p,q) model according to a formula of *Xₜ*-*ϕ*₁X_{*t*-1} -···- ϕ*ₚXₜ₋ₚ* = ε*ₜ-*θ₁ε_{*t*-1} *-···-* θ*_{q}*ε*_{t-q},* wherein X is Auto-Regressive Moving Average Sequence of which orders of the ARMA(p,q) model are p and q, and ε represents stationary white noise of which an average value is zero and a variance is σ².

9. The wind power prediction method of claim 8, wherein m=p+q+Y, wherein Y is a predetermined number of feature sub-fragments of each of the feature fragments and is an integer greater than or equal to one.

10. The method of claim 9, wherein m the feature values are respectively ϕ₁,ϕ₂ ...ϕ*ₚ*; θ₁ θ₂...θ*_{q}* and an average value of each of Y the feature sub-fragments.

11. The wind power prediction method of claim 1 or 2, wherein the clustering algorithm adopted in the Step b is a K-means algorithm or a Kohonen algorithm.

12. The wind power prediction method of claim 1 or 2, wherein the Step c comprises:
determining the center of the current time fragment with the adoption of a predetermined model, weights n₁, n₂, n₃......n_{W} of the w cluster centers and the center of the current time fragment, and powers P₁, P₂, P₃......P_{w} of all the cluster centers;
the power P (T+1) is n₁×P₁+n₂×P₂+n₃×P₃+...n_{W}×P_{W}.

13. The wind power prediction method of claim 12, wherein the predetermined model adopted for determining the center of the current time fragment is an ARMA(p,q) model.
